# EUROPEAN PATENT APPLICATION

(11) **EP 4 297 481 A1**
(43) Date of publication of application: **27.12.2023**
(21) Application number: 22756615.5
(22) Date of filing: 16.02.2022
(51) Int. Cl.: H04W 36/00, H04W 36/14, H04W 76/40, H04W 76/30

(54) **MBS-RELATED COMMUNICATION METHOD**

(30) Priority: 18.02.2021 KR 20210022016
(71) Applicant: LG Electronics Inc., Yeongdeungpo-gu Seoul 07336 (KR)
(72) Inventor: YOUN, Myungjune, Seoul 06772 (KR); KIM, Laeyoung, Seoul 06772 (KR)
(74) Representative: Maikowski & Ninnemann Patentanwälte Partnerschaft mbB
(86) International application number: PCT/KR2022/095031
(87) International publication number: WO 2022/177417

(57) **Abstract**

One disclosure of the present specification provides a method by which a UE performs communication. The method comprises the steps of: joining multicast and broadcast services (MBS); serving data for the MBS by means of a 5th generation system (5GS), and performing a handover from the 5GS to an evolved packet system (EPS); receiving the data for the MBS through a packet data network (PDN) connection after the handover; determining a leave from the MBS; and transmitting an NAS signal including protocol configuration options (PCO) to the network, wherein the PCO includes information on the leave of the UE from the MBS.

## Description

### TECHNICAL FIELD

The present specification relates to mobile communications.

### BACKGROUND

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

### TECHNICAL PROBLEM

If a terminal joins an MBS in 5GS and then the device is handed over to EPS, the problem is how the device leaves that MBS.

### TECHNICAL SOLUTION

A terminal can send a NAS signal, to the network, containing a PCO that includes the leave information for that MBS so that the terminal can leave the MBS.

### ADVANTAGEOUS EFFECTS

The present specification may have various effects.

For example, with the procedures disclosed in the present specification, for traffic transmitted in a multicast manner in the 5GS, if the UE moves to the EPS and then switches a PDN connection to transmit the traffic, it is possible to prevent unnecessary wasted resources by requesting to discontinue transmission of MBS traffic when the terminal no longer wants to receive MBS services..

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of a wireless device to which implementations of the present disclosure is applied.
FIG. 4 shows an example of UE to which implementations of the present disclosure is applied.
FIGS. 5 shows examples of 5G system architectures to which implementations of the present specification are applied.
FIG. 6 shows an example of how MBS traffic is delivered.
FIG. 7 and FIG. 8 show an example of 5GS to EPS handover for single registration mode with N26 interface.
FIG. 9 illustrates a first disclosure of the present specification.
FIG. 10 illustrates a second disclosure of the present specification.
FIG. 11 shows a procedure of a terminal according to the first disclosure of this specification.

### DETAILED DESCRIPTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C" .

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

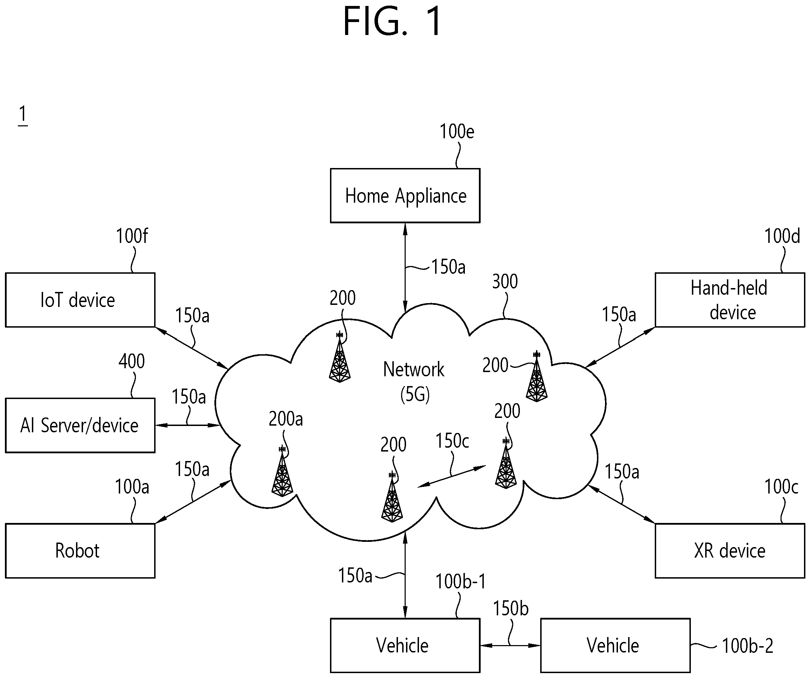

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/SG devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5GNR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

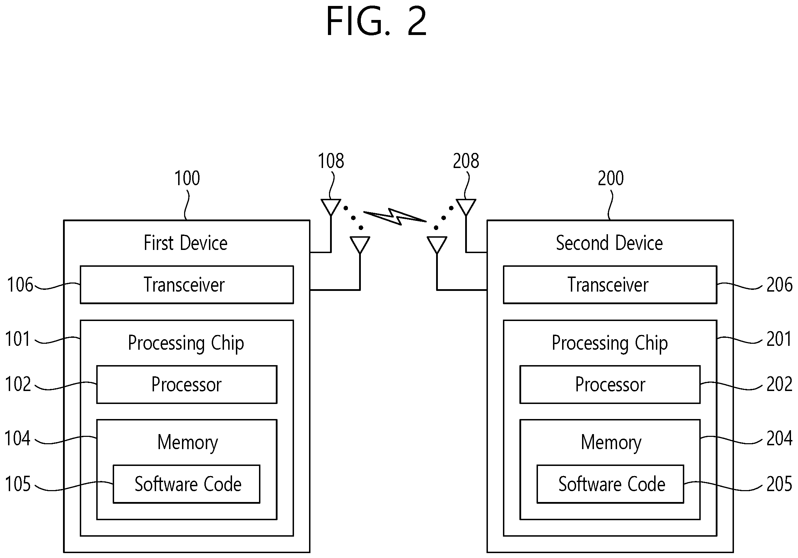

**FIG. 2** **shows an example of wireless devices to which implementations of the present disclosure is applied.**

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

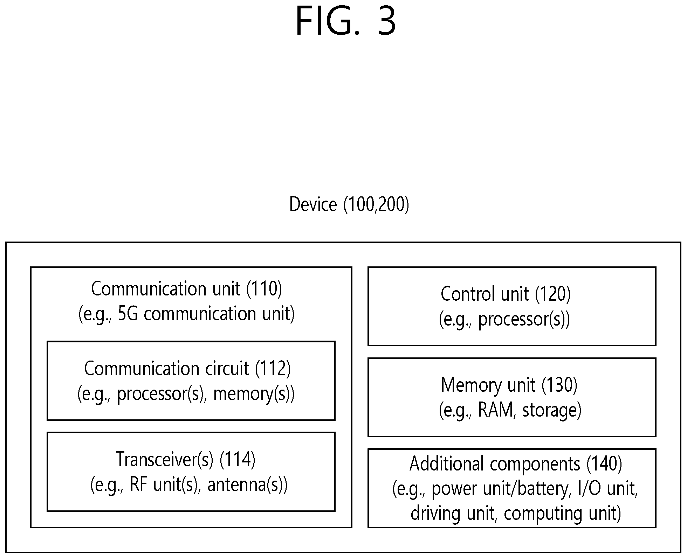

**FIG. 3** **shows an example of a wireless device to which implementations of the present disclosure is applied.**

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

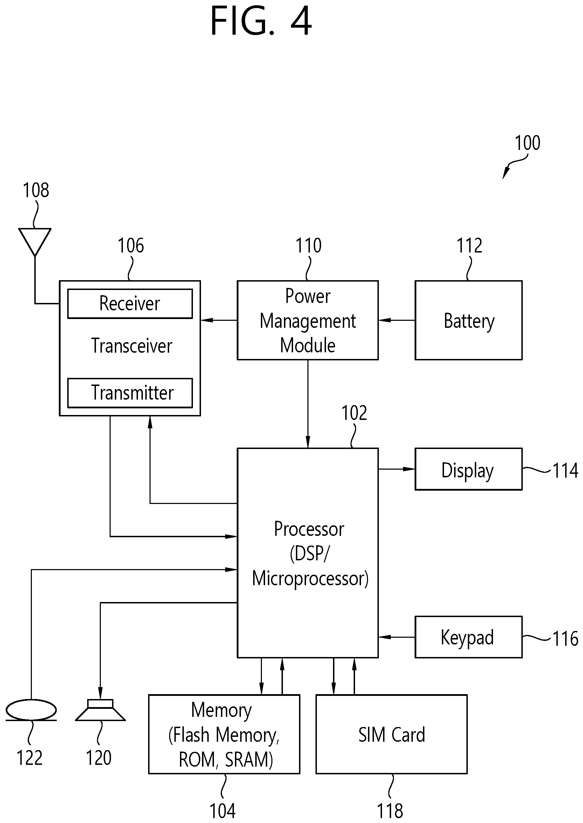

**FIG. 4** **shows an example of UE to which implementations of the present disclosure is applied.**

Referring to FIG. 4, a LTE 100 may correspond to the first wireless device 100 of FIG. 2 and/or the wireless device 100 or 200 of FIG. 3.

A UE 100 includes a processor 102, a memory 104, a transceiver 106, one or more antennas 108, a power management module 110, a battery 112, a display 114, a keypad 116, a subscriber identification module (SIM) card 118, a speaker 120, and a microphone 122.

The processor 102 may be configured to implement the descriptions, functions, procedures, suggestions, methods and/or operational flowcharts disclosed in the present disclosure. The processor 102 may be configured to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of a digital signal processor (DSP), a central processing unit (CPU), a graphics processing unit (GPU), a modem (modulator and demodulator). An example of the processor 102 may be found in SNAPDRAGON^{™} series of processors made by Qualcomm^{®}, EXYNOS^{™} series of processors made by Samsung^{®}, a series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 110 manages power for the processor 102 and/or the transceiver 106. The battery 112 supplies power to the power management module 110.

The display 114 outputs results processed by the processor 102. The keypad 116 receives inputs to be used by the processor 102. The keypad 116 may be shown on the display 114.

The SIM card 118 is an integrated circuit that is intended to securely store the international mobile subscriber identity (IMSI) number and its related key, which are used to identify and authenticate subscribers on mobile telephony devices (such as mobile phones and computers). It is also possible to store contact information on many SIM cards.

The speaker 120 outputs sound-related results processed by the processor 102. The microphone 122 receives sound-related inputs to be used by the processor 102.

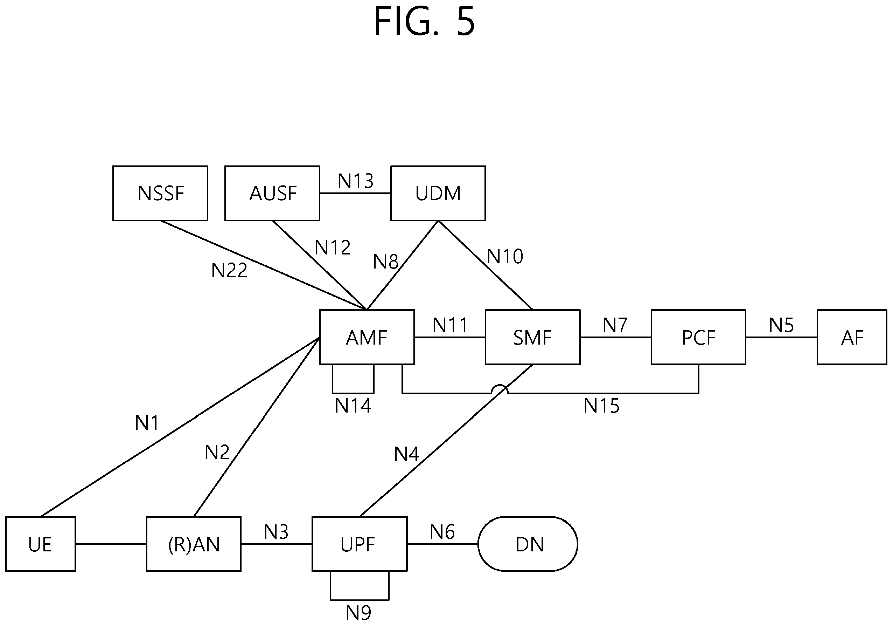

**FIGS. 5** **shows examples of 5G system architectures to which implementations of the present specification are applied.**

The 5G system (5GS; 5G system) structure consists of the following network functions (NFs).
- AUSF (Authentication Server Function)
- AMF (Access and Mobility Management Function)
- DN (Data Network), e.g., operator services, internet access or third-party services
- USDF (Unstructured Data Storage Function)
- NEF (Network Exposure Function)
- I-NEF (Intermediate NEF)
- NRF (Network Repository Function)
- NSSF (Network Slice Selection Function)
- PCF (Policy Control Function)
- SMF (Session Management Function)
- UDM (Unified Data Management)
- UDR (Unified Data Repository)
- UPF (User Plane Function)
- UCMF (UE radio Capability Management Function)
- AF (Application Function)
- UE (User Equipment)
- (R)AN ((Radio) Access Network)
- 5G-EIR (5G-Equipment Identity Register)
- NWDAF (Network Data Analytics Function)
- CHF (Charging Function)

In addition, the following network functions may be considered.
- N3IWF (Non-3GPP InterWorking Function)
- TNGF (Trusted Non-3GPP Gateway Function)
- W-AGF (Wireline Access Gateway Function)

FIG. 5 shows the 5G system structure of a non-roaming case using a reference point representation that shows how various network functions interact with each other.

In FIG. 5, UDSF, NEF and NRF are not described for clarity of the point-to-point diagram. However, all network functions shown may interact with UDSF, UDR, NEF and NRF as needed.

For clarity, the connection between the UDR and other NFs (e.g., PCFs) is not shown in FIG. 5. For clarity, the connection between NWDAF and other NFs (e.g. PCFs) is not shown in FIG. 5.

The 5G system architecture includes the following reference points.
- N1: the reference point between the UE and the AMF.
- N2: reference point between (R)AN and AMF.
- N3: Reference point between (R)AN and UPF.
- N4: reference point between SMF and UPF.
- N6: Reference point between UPF and data network.
- N9: reference point between two UPFs.

The following reference points show the interactions that exist between NF services in NF.
- N5: Reference point between PCF and AF.
- N7: reference point between SMF and PCF.
- N8: reference point between UDM and AMF.
- N10: reference point between UDM and SMF.
- N11: reference point between AMF and SMF.
- N12: reference point between AMF and AUSF.
- N13: reference point between UDM and AUSF.
- N14: reference point between two AMFs.
- N15: Reference point between PCF and AMF in case of non-roaming scenario, and reference point between PCF and AMF of visited network in case of roaming scenario.
- N16: reference point between two SMFs (in case of roaming, between the SMF of the visited network and the SMF of the home network)
- N22: reference point between AMF and NSSF.

In some cases, it may be necessary to connect two NFs to each other to service the UE.

### <Multicast and Broadcast Services>

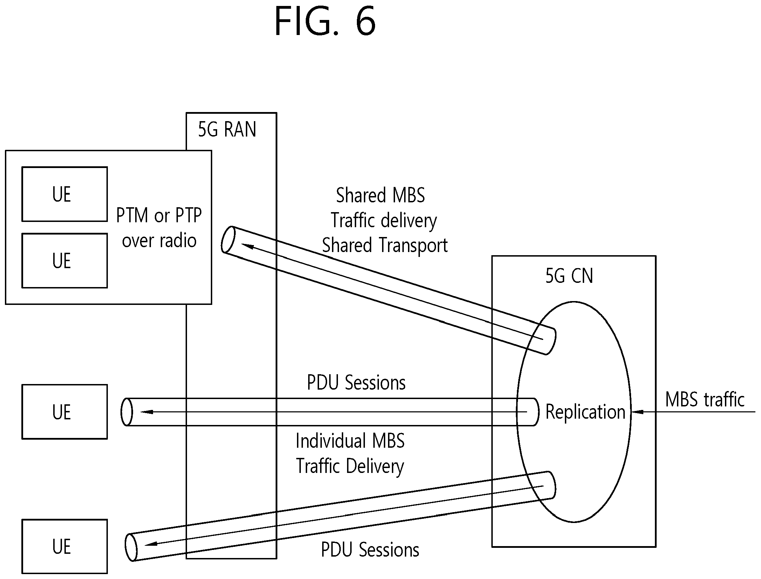

**FIG. 6** **shows an example of how MBS traffic is delivered.**

MBS (Multicast and Broadcast Services) traffic needs to be delivered from a single data source (Application Service Provider) to multiple UEs. Depending on many factors, multiple delivery methods may be used to deliver MBS traffic in the 5GS. For clarity, delivery methods are not referred to as unicast/multicast/broadcast but as described below.

The term "unicast delivery" refers to a mechanism by which application data and signalling between the LTE and the application server are delivered using PDU Session within the 3GPP network and using individual UE and application server addresses (e.g. IP addresses) between the 3GPP network and the application server.

From the view point of 5G CN, two delivery methods are possible for MBS multicast service.
- 5GC Shared MBS traffic delivery method: 5G CN receives a single copy of MBS data packets and delivers a single copy of those MBS packets packet to a RAN node, which then delivers them to one or multiple UEs.
- 5GC Individual MBS traffic delivery method: 5G CN receives a single copy of MBS data packets and delivers separate copies of those MBS data packets to individual UEs via per-UE PDU sessions, hence for each such UE one PDU session is required to be associated with a multicast session. The IP router uses an IP address that supports multicast to send traffic to the devices that are subscribed to it. If multiple devices are attached to the same IP router, the router generates multicast packets directly to transmit traffic. In this case, MBS data is not transmitted to the terminal using the terminal's PDU session.

If SGC Individual MBS traffic delivery method is supported, a same received single copy of MBS data packets by the CN may be delivered via both SGC Individual MBS traffic delivery method for some LTE(s) and SGC Shared MBS traffic delivery method for other UEs.

From the viewpoint of RAN, (in the case of the shared delivery) two delivery methods are available for the transmission of MBS packet flows over radio.
- Point-to-Point (PTP) delivery method: a RAN node delivers separate copies of MBS data packet over radio to individual UE.
- Point-to-Multipoint (PTM) delivery method: a RAN node delivers a single copy of MBS data packets over radio to a set of LTEs.

ARAN node may use a combination of PTP/PTM to deliver an MBS packet to LTEs.

The PTP and PTM delivery methods are defined in RAN WGs and they are listed here for reference only.

As depicted in the following figure, PTP or PTM delivery (with SGC shared delivery method) and SGC Individual delivery method may be used at the same time for a multicast MBS session.

For MBS broadcast service, only SGC Shared MBS traffic delivery method with PTM delivery is applicable.

Multicast transmission for MBS is not supported by EPS. Therefore, if a UE receives MBS traffic in a multicast method in SGS, it shall ensure that it can continue to receive such MBS traffic in a unicast method when moving to EPS.

The above multicast transmission may be interpreted as transmitting traffic using the path/tunnel/resource formed for the multicast group (referred to as utilizing a shared resource) rather than transmitting traffic via a PDU session formed by the UE. In the former case, the shared resource may be used in both the core network segment and the radio segment, or the shared resource may be used in the core network segment only.

On the other hand, when a UE moves from 5GS to EPS, it will only move to EPS for QoS flows to which it has been assigned an EPS Bearer ID (EBI).

### <Handover from 5GS to EPS>.

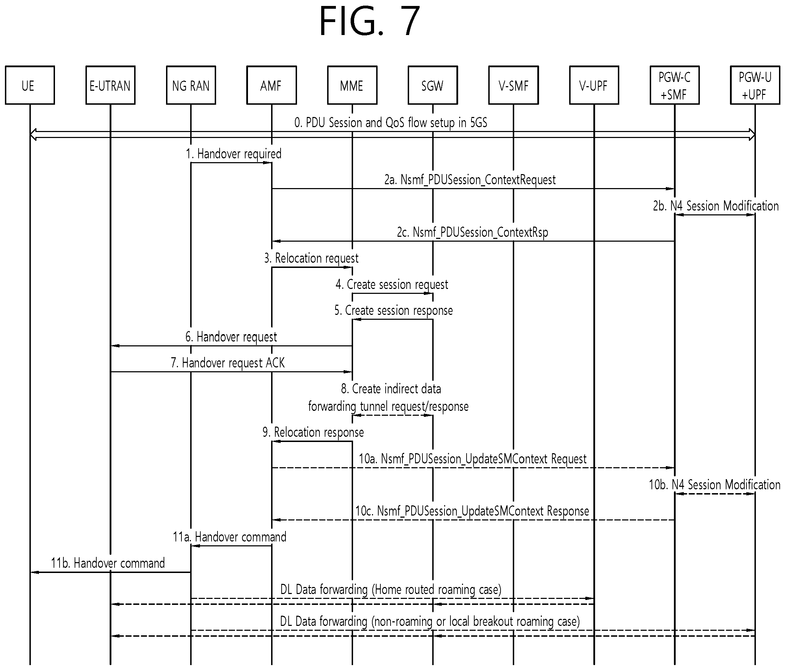

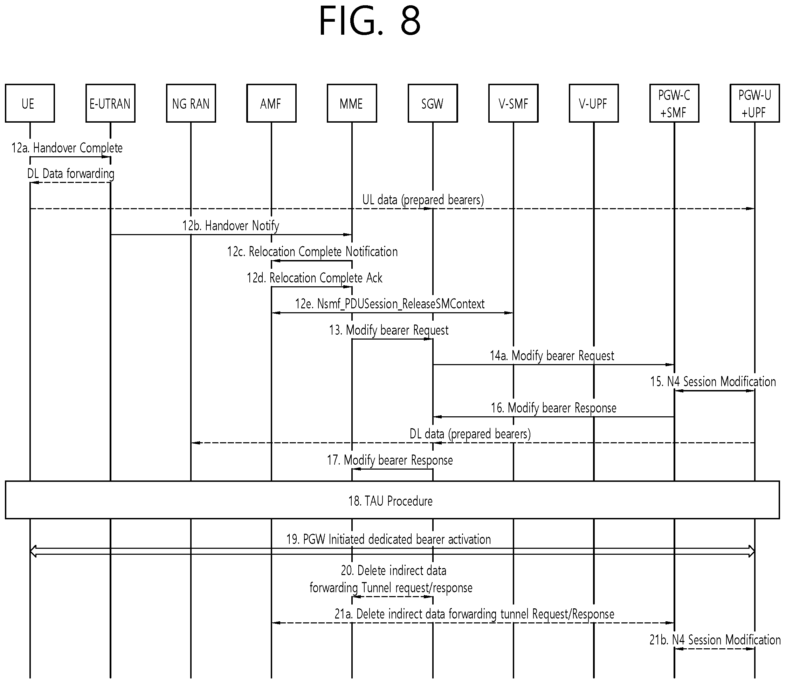

**FIG. 7** **and** **FIG. 8** **show an example of 5GS to EPS handover for single registration mode with N26 interface.**

FIG. 7 and FIG. 8 describe the handover procedure from 5GS to EPS when N26 is supported.

In the case of handover to a shared EPS network, the source NG-RAN determines a PLMN to be used in the target network. The source NG-RAN shall indicate the selected PLMN ID to be used in the target network to the AMF as part of the TAI sent in the HO Required message.

In the case of handover from a shared NG-RAN, the AMF may provide the MME with an indication that the SGS PLMN is a preferred PLMN at later change of the LTE to a SGS shared networks.

During the handover procedure, the source AMF shall reject any PGW-C+SMF initiated N2 request received since handover procedure started and shall include an indication that the request has been temporarily rejected due to handover procedure in progress.

The procedure involves a handover to EPC and setup of default EPS bearer and dedicated bearers for QoS Flows that have EBI assigned, in EPC in steps 1-16 and reactivation, if required, of dedicated EPS bearers for non-GBR QoS Flows that have no EBI assigned, in step 19. This procedure can be triggered, for example, due to new radio conditions, load balancing or in the presence of QoS Flow for normal voice or IMS emergency voice, the source NG-RAN node may trigger handover to EPC.

For Ethernet and Unstructured PDU Session Types, the PDN Type Ethernet and non-IP respectively are used, when supported, in EPS.

When EPS supports PDN Type non-IP but not PDN type Ethernet, PDN type non-IP is used also for Ethernet PDU sessions. The SMF shall also set the PDN Type of the EPS Bearer Context to non-IP in this case. After the handover to EPS, the PDN Connection will have PDN Type non-IP, but it shall be locally associated in UE and SMF to PDU Session Type Ethernet or Unstructured respectively.

In the roaming home routed case, the PGW-C+SMF always provides the EPS Bearer ID and the mapped QoS parameters to UE. The V-SMF caches the EPS Bearer ID and the mapped QoS parameters obtained from H-SMF for this PDU session. This also applies in the case that the HPLMN operates the interworking procedure without N26.

NOTE 1: The IP address preservation cannot be supported, if PGW-C+SMF in the HPLMN doesn't provide the mapped QoS parameters.
1. NG-RAN decides that the UE should be handed over to the E-UTRAN. If NG-RAN is configured to perform Inter RAT mobility due to IMS voice fallback triggered by QoS flow setup and request to setup QoS flow for IMS voice was received, NG-RAN responds indicating rejection of the QoS flow establishment because of mobility due to fallback for IMS voice via N2 SM information and triggers handover to E-UTRAN. The NG-RAN sends a Handover Required (Target eNB ID, Direct Forwarding Path Availability, Source to Target Transparent Container, inter system handover indication) message to the AMF. NG-RAN indicates bearers corresponding to the 5G QoS Flows for data forwarding in Source to Target Transparent Container.

Direct Forwarding Path Availability indicates whether direct forwarding is available from the NG-RAN to the E-UTRAN. This indication from NG-RAN can be based on e.g. the presence of IP connectivity and security association(s) between the NG-RAN and the E-UTRAN.

If the handover is triggered due to Emergency fallback, the NG-RAN may forward the Emergency indication to the target eNB in the Source to Target Transparent Container, and the target eNB allocates radio bearer resources taking received indication.
2. The AMF determines from the 'Target eNB Identifier' IE that the type of handover is Handover to E-UTRAN. The AMF selects an MME.

In the case of HR roaming, the AMF by using Nsmf_PDUSession_Context Request requests the V-SMF to provide SM Context that also includes the mapped EPS Bearer Contexts. The AMF provides the target MME capability to SMF in the request to allow the V-SMF to determine whether to include EPS Bearer context for Ethernet PDN Type or non-IP PDN Type or not. For PDU Sessions with PDU Session Type Ethernet, if the LTE and target MME supports Ethernet PDN type, the SMF provides SM Context for Ethernet PDN Type, otherwise if the target MME does not support Ethernet Type but support non-IP Type, the SMF provides SM Context for non-IP PDN Type. For PDU Sessions with PDU Session Type Unstructured, the SMF provides SM Context for non-IP PDN Type.

In the case of non-roaming or LBO roaming, the AMF request PGW-C+SMF to provide SM Context by using Nsmf_PDUSession_ContextRequest. The AMF provides the target MME capability to PGW-C+SMF in the request to allow the PGW-C+SMF to determine whether to include EPS Bearer context for Ethernet Type or non-IP PDN Type or not. For PDU Sessions with PDU Session Type Ethernet, if the LTE and target MME supports Ethernet PDN type, the SMF provides SM Context for Ethernet PDN Type, otherwise if the target MME does not support Ethernet but support non-IP PDN Type, the SMF provides SM Context for non-IP PDN Type. For PDU Sessions with PDU Session Type Unstructured, the SMF provides SM Context for non-IP PDN Type. The PGW-C+SMF send N4 Session modification to PGW-U+UPF to establish the CN tunnel for each EPS bearer and provide EPS Bearer Contexts to AMF. The PGW-U+UPF is ready to receive the uplink packet from E-UTRAN.

This step is performed with all the PGW-C+SMFs corresponding to PDU Sessions of the UE which are associated with 3GPP access and have EBI(s) allocated to them.

NOTE 2: The AMF knows the MME capability to support Ethernet PDN type and/or non-IP PDN type or not through local configuration.

NOTE 3: In home routed roaming scenario, the UE's SM EPS Contexts are obtained from the V-SMF.

3. The AMF sends a Forward Relocation Request, with the following modifications and clarifications.
- Parameter "Return preferred" may be included. Return preferred is an optional indication by the MME of a preferred return of the UE to the 5GS PLMN at a later access change to a SGS shared network. An MME may use this information.
- The SGW address and TEID for both the control-plane or EPS bearers in the message are such that target MME selects a new SGW.
- The AMF determines, based on configuration and the Direct Forwarding Path Availability, the Direct Forwarding Flag to inform the target MME whether direct data forwarding is applicable.
- The AMF includes the mapped SM EPS LTE Contexts for PDU Sessions with and without active UP connections.

4-5. MME transmits Create session request to SGW. The SGW responds to MME.

6. MME transmits Handover request to E-UTRAN.
- Handover Request may contain information Handover Restriction List with information about PLMN IDs.
- The target eNB should establish E-RABs indicated by the list of EPS bearer to be setup provided by the MME, even if they are not included in the source to target container.

7-9. E-UTRAN transmits Handover request ACK to MME. MME and SGW transmits/receives Create indirect data forwarding tunnel request/response. MME transmits Relocation response to AMF.

10a. If data forwarding applies, the AMF sends the Nsmf_PDUSession_UpdateSMContext Request (data forwarding information) to the PGW-C+SMF. If multiple PGW-C+SMFs serves the UE, the AMF maps the EPS bearers for Data forwarding to the PGW-C+SMF address(es) based on the association between the EPS bearer ID(s) and PDU Session ID(s). In home-routed roaming case, the AMF requests the V-SMF to create indirect forwarding tunnel if indirect forwarding applies.

10b. If indirect data forwarding applies, the PGW-C+SMF may select an intermediate PGW-U+UPF for data forwarding. The PGW-C+SMF maps the EPS bearers for Data forwarding to the 5G QoS flows based on the association between the EPS bearer ID(s) and QFI(s) for the QoS flow(s) in the PGW-C+SMF, and then sends the QFIs, Serving GW Address(es) and TEID(s) for data forwarding to the PGW-U+UPF. If CN Tunnel Info for Data Forwarding is allocated by the PGW-C+SMF, the CN Tunnel Info for Data Forwarding is provided to PGW-U+UPF in this step. The PGW-U+UPF acknowledges by sending a response. If CN Tunnel Info is allocated by the PGW-U+UPF, the CN Tunnel Info is provided to PGW-C+SMF in this response. In home-routed roaming case, the V-SMF selects the V-UPF for data forwarding.

10c. The PGW-C+SMF returns an Nsmf_PDUSession_UpdateSMContext Response (Cause, Data Forwarding tunnel Info, QoS flows for Data Forwarding). Based on the correlation between QFI(s) and Serving GW Address(es) and TEID(s) for data forwarding, the PGW-U+UPF maps the QoS flow(s) into the data forwarding tunnel(s) in EPC.

11. The AMF sends the Handover Command to the source NG-RAN (Transparent container (radio aspect parameters that the target eNB has set-up in the preparation phase), Data forwarding tunnel info, QoS flows for Data Forwarding). The source NG-RAN commands the UE to handover to the target access network by sending the HO Command. The UE correlates the ongoing QoS Flows with the indicated EPS Bearer IDs to be setup in the HO command. The LTE locally deletes the PDU Session if the QoS Flow associated with the default QoS rule in the PDU Session does not have an EPS Bearer ID assigned. If the QoS Flow associated with the default QoS rule has an EPS Bearer ID assigned, the UE keeps the PDU Session (PDN connection) and for the remaining QoS Flow(s) that do not have EPS bearer ID(s) assigned, the LTE locally deletes the QoS rule(s) and the QoS Flow level QoS parameters if any associated with those QoS Flow(s) and notifies the impacted applications that the dedicated QoS resource has been released. The UE deletes any UE derived QoS rules. The EPS Bearer ID that was assigned for the QoS flow of the default QoS rule in the PDU Session becomes the EPS Bearer ID of the default bearer in the corresponding PDN connection.

If indirect data forwarding is applied, Data forwarding tunnel info includes CN tunnel info for data forwarding per PDU session. For the QoS Flows indicated in the "QoS Flows for Data Forwarding", NG-RAN initiate data forwarding via to the PGW-U+UPF based on the CN Tunnel Info for Data Forwarding per PDU Session. Then the PGW-U+UPF maps data received from the data forwarding tunnel(s) in the 5GS to the data forwarding tunnel(s) in EPS, and sends the data to the target eNodeB via the Serving GW.

If direct data forwarding is applied, Data forwarding tunnel info includes E-UTRAN tunnel info for data forwarding per EPS bearer. NG-RAN initiate data forwarding to the target E-UTRAN based on the Data Forwarding Tunnel Info for Data Forwarding per EPS bearer.

12-12c. The AMF request the release of the PDU Session which is associated with 3GPP access, not expected to be transferred to EPC, i.e. no EBI(s) allocated to them, and corresponding to the PGW-C+SMF which is not contacted by AMF for SM context at step 2.

12d. The AMF acknowledges MME with Relocation Complete Ack message. A timer in AMF is started to supervise when resource inNG-RAN shall be released.

12e. In case of home routed roaming, the AMF invokes Nsmf_PDUSession_ReleaseSMContext Request(V-SMF only indication) to the V-SMF. This service operation request the V-SMF to remove only the SM context in V-SMF, i.e. not release PDU Session context in the PGW-C+SMF.

If indirect forwarding tunnel(s) were previously established, the V-SMF starts a timer and releases the SM context on expiry of the timer. If no indirect forwarding tunnel has been established, the V-SMF immediately releases the SM context and its UP resources for this PDU Sesssion in V-UPF locally.

14a. If the PDU Session (PDN connection) has QoS Flows that do not have EPS bearer ID(s) assigned, the PGW-C+SMF deletes the PCC rule(s) associated with those QoS Flows and informs the PCF about the removed PCC rule(s).

NOTE 4: If the QoS flow is deleted, the IP flows of the deleted QoS rules will continue flowing on the default EPS bearer if it does not have an assigned TFT. If the default EPS bearer has an assigned TFT, the IP flows of the deleted QoS Flow may be interrupted until step 19 when dedicated bearer activation is triggered by a request from the PCF.

The PGW-C+SMF may need to report some subscribed event to the PCF by performing an SMF initiated SM Policy Association Modification procedure.

15. The PGW-C+SMF initiates a N4 Session Modification procedure towards the UPF+PGW-U to update the User Plane path, i.e. the downlink User Plane for the indicated PDU Session is switched to E-UTRAN. The PGW-C+SMF releases the resource of the CN tunnel for PDU Session in UPF+PGW-U.

16. At this stage the User Plane path is established for the default bearer and the dedicated EPS bearers between the UE, target eNodeB, Serving GW and the PGW-U+UPF. The PGW-C+SMF uses the EPS QoS parameters as assigned for the dedicated EPS bearers during the QoS Flow establishment. PGW-C+SMF maps all the other IP flows to the default EPS bearer (see NOTE 4).

If indirect forwarding tunnel(s) were previously established, the PGW-C+SMF starts a timer, to be used to release the resource used for indirect data forwarding.

18. The UE initiates a Tracking Area Update procedure.

This includes the deregistration of the old AMF for 3GPP access from the HSS+UDM. Any registration associated with the non-3GPP access in the old AMF is not removed (i.e. an AMF that was serving the UE over both 3GPP and non-3GPP accesses does not consider the UE as deregistered over non 3GPP access and will remain registered and subscribed to subscription data updates in UDM).

NOTE 5: The behavior whereby the HSS+UDM cancels location of CN node of the another type, i.e. AMF, is similar to HSS behavior for MME and Gn/Gp SGSN registration. The target AMF that receives the cancel location from the HSS+UDM is the one associated with 3GPP access.

When the LTE decides to deregister over non-3GPP access or the old AMF decides not to maintain a UE registration for non-3GPP access anymore, the old AMF then deregisters from UDM by sending a Nudm_UECM_Deregistration service operation, unsubscribes from Subscription Data updates by sending an Nudm_SDM_Unsubscribe service operation to UDM and releases all the AMF and AN resources related to the UE.

19. If PCC is deployed, the PCF may decide to provide the previously removed PCC rules to the PGW-C+SMF again thus triggering the PGW-C+SMF to initiate dedicated bearer activation procedure. This step is applicable for PDN Type IP or Ethernet, but not for non-IP PDN Type.

21. In the case of home routed roaming, at the expiry of the timer at V-SMF started at step 12e, the V-SMF locally releases the SM context and the UP resource for the PDU Session including the resources used for indirect forwarding tunnel(s) that were allocated at step 10.

In non-roaming or local breakout roaming, if PGW-C+SMF has started a timer in step 16, at the expiry of the timer, the PGW-C+SMF sends N4 Session Modification Request to PGW-U+UPF to release the resources used for the indirect forwarding tunnel(s) that were allocated at step 10.

When the timer set in step 12d expires, AMF also sends a UE Context Release Command message to the source NG RAN. The source NG RAN releases its resources related to the UE and responds with a UE Context Release Complete message.

### <Problem to be solved by the disclosure of this specification>

In order for a UE to receive a multicast service, a NAS message, the UE uses a NAS message to notify the Join. And, the UE also uses a NAS message to leave when it wants to discontinue the service.

The NAS messages sent by the UE to join or leave the multicast service are transmitted via SMF as Session Management NAS messages.

If a terminal receives Multicast and Broadcast Services (MBS) from the 5GS and needs to move to the EPS, if the EPS does not support Multicast and Broadcast Services (MBS) services, MBS traffic may be continuously transmitted to the terminal using an individual delivery method.

In this case, if a terminal wishes to stop receiving multicast services, it must send a NAS message to notify the network. However, since the device has crossed over to EPS, it cannot send a 5GS NAS message to stop the multicast service. In this case, MBS data will continue to be sent to the terminal, which will waste resources unnecessarily.

### <Disclosure of this specification>

The disclosures described herein may be implemented in one or more combinations, such as combinations comprising at least one of those described below. Each of the drawings illustrates an embodiment of each disclosure, but the embodiments in the drawings may be implemented in combination with each other.

The disclosures herein may comprise any combination of one or more of the actions/configurations/steps described below. The methods described below may be performed or used combinatorially or complementarily.

As used herein, MBS may be interpreted as equivalent to Multimedia Broadcast/Multicast Service (MBMS).

As used herein, MBS sessions may be interpreted to include MBS multicast sessions and MBS broadcast sessions, and MBS data may be interpreted to include MBS multicast data and MBS broadcast data.

The terms multicast session, multicast service, and multicast group may be used interchangeably herein.

PCO and EPCO may be used interchangeably herein.

SMF, PGW, P-GW, PGW-C+SMF may be used interchangeably herein.

The following drawings are intended to illustrate specific embodiments of this specification. The designations of specific devices or the designations of specific signals/messages/fields shown in the drawings are for illustrative purposes only, and the technical features of the present disclosure are not limited to the specific designations used in the drawings.

### 1. The first disclosure

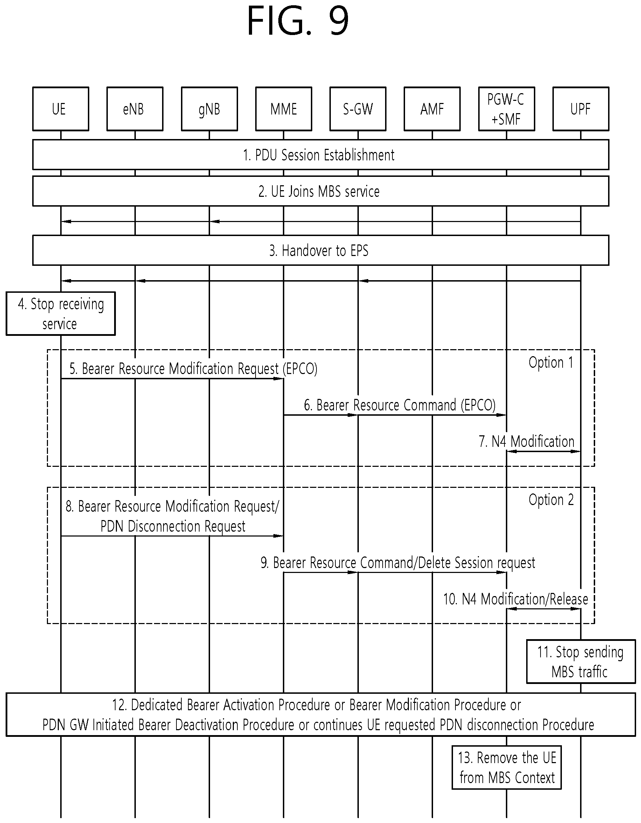

**FIG. 9** **illustrates a first disclosure of the present specification.**

FIG. 9 illustrates a method for notifying a PGW-C+SMF to leave.
option 1 and option 2 are provided as two methods for notifying a leave to the PGW-C+SMF:.
Option 1: When a terminal wishes to stop receiving MBS services from the EPS (or to leave the multicast service), the terminal may include an indication or message (indicating that the terminal is leaving) in the (E)PCO part of a BEARER RESOURCE MODIFICATION REQUEST message, PDN DISCONNECT REQUEST message, or BEARER RESOURCE ALLOCATION REQUEST message and may send it to the network. Upon receipt, the PGW-C+SMF may process it in the same way as if the terminal had sent a Leaving in SGS. For example, it may delete the terminal's context from the MBS context. It may also stop transmission for MBS traffic carried over the PDN connection.
Option 2: If the terminal wishes to stop receiving MBS services (or to leave the multicast service), it may send a BEARER RESOURCE MODIFICATION REQUEST message to: i) request to release the dedicated bearer that is receiving MBS services; or ii) send a PDN DISCONNECT REQUEST message to disconnect the PDN connection that is receiving MBS services. Unlike option 1, the terminal does not include an indication or message in the Extended Protocol Configuration Options (EPCO) to indicate a leave. This method may be used when PGW-C+SMF does not support leave via EPCO. However, it is not limited to this. If the PGW-C+SMF receives the NAS message sent by the terminal and requests to release dedicated bearer, it may determine which MBS service is being transmitted over the dedicated bearer and treat the terminal as having left the MBS service. If a PDN disconnection is requested, the terminal may be treated as leaving all MBS services provided through the PDN connection.

The following procedure is described below.

After the terminal registers in the SGS, it can create a PDU session. During this process, the terminal may send a PDU session request to indicate that the terminal is capable of receiving multicast services. The terminal may then allow the session to be created via PGW-C+SMF where the AMF supports multicast. During this process, if the terminal supports leave via EPCO, the terminal may notifies it to the PGW-C+SMF. The terminal may indicate in the PDU Session Establishment Request message that it is capable of receiving multicast services in the form of capability of the terminal. Alternatively, the terminal may include in the MM NAS message that the terminal is capable of receiving multicast services and transmit, and the AMF may send the capability information when the AMF sends the PDU Session Establishment Request message to the PGW-C+SMF. Based on the capability information sent by the terminal, the SMF may include, in the PDU Session Establishment Accept message, whether the PGW-C+SMF supports leave via EPCO and notify it to the terminal. If the SMF does not indicate whether the PGW-C+SMF supports leave via EPCO, the terminal may assume that the PGW-C+SMF does not support leave via EPCO.
2. In order to receive MBS services, especially multicast services, the terminal may send a NAS message to indicate that it is joining the service. The terminal may indicate which MBS service the terminal wants to join by providing TMGI information (which can be interpreted as an MBS Session ID) that maps to the MBS service the terminal wants to join. The device may then receive the service via the SGC Individual MBS traffic delivery method or the SGC Shared MBS traffic delivery method.
3. Handover to the EPS may occur due to the mobility of the terminal. At this time, since multicast is not supported in EPS, the terminal may receive data via SGC Individual MBS traffic delivery method. In other words, the application layer receives multicast traffic in the same way as the 5GC Shared MBS traffic delivery method (i.e., it receives packets with multicast IP addresses), but in the actual 5GC network, the data transmission is treated the same as transmitting unicast traffic, and the network may transmit traffic to the terminal using the terminal's PDN session.
4. The terminal may decide to stop receiving MBS services. Alternatively, the terminal may decide to leave the multicast service.

(Option 1) If the terminal supports leaving via EPCO, steps 5-7 may be performed.

5-6. While performing the Bearer Resource Modification procedure, the terminal may include the Extended Protocol Configuration Options (EPCO) in the Bearer Resource Modification Request message for notifying that the terminal is leaving the multicast service. This may be accompanied by relevant TMGI information to indicate which MBS service the request is for. Instead of the above EPCOs, PCO may be used to indicate the leaving of a multicast service.

Based on whether the PGW-C+SMF received by the terminal in step 1 supports leave via EPCO, the terminal may decide to perform the leave via EPCO in the Bearer Resource Modification Request message. If the PGW-C+SMF supports leave via EPCO, the terminal may indicate to leave from the multicast service via the EPCO in the Bearer Resource Modification Request message. If no capability information is exchanged in step 1, the terminal may try to leave via EPCO first. If the PGW-C+SMF supports leave via EPCO, the PGW-C+SMF may notify the terminal via EPCO if the leave is successful. This allows the terminal to determine if the leave is successful.

7. the PGW-C+SMF may recognize that the terminal is no longer receiving multicast services by confirming the leave in EPCO sent by the terminal. The PGW-C+SMF may then perform an N4 Modification to the UPF to stop the transmission of MBS data to the terminal.

(Option 2) Steps 8 to 10 may be performed if: i) the terminal has attempted to leave via EPCO in steps 5 to 7 but has not been successful (e.g., the PGW-C+SMF has not informed the terminal via EPCO that the leave has been successful); or ii) the terminal does not support leaving via EPCO; or iii) the PGW-C+SMF does not support leaving via EPCO.

8. To stop receiving MBS services, the terminal may request deactivation of the dedicated bearer receiving the MBS traffic. For example, when a terminal wishes to stop receiving MBS services for a TMGI, the terminal may find out the dedicated bearer receiving MBS traffic for the TMGI and request deactivation of that dedicated bearer. To do this, the terminal may store mapping information about the TMGI, the 5GS QoS Flow, and the EPS bearer. This may be based on the 5GS QoS Flow and EPS bearer information generated by the network when the terminal sent the NAS message to join the MBS service in 5GS in step 2. Alternatively, the network may explicitly inform the relationship between TMGI and QoS Flow and EPS bearer through NAS signaling. If the terminal cannot find a dedicated bearer for the MBS service, or if the terminal wishes to leave all MBS services provided by the PDN connection, it may request PDN disconnection.

9. If the terminal requests deactivation for a specific dedicated bearer, the PGW-C+SMF may treat the terminal as having left the MBS services provided over that bearer. By default, the PGW-C+SMF knows the MBS QoS Flow and its associated QoS Flow and EPS bearer information when the MBS service is initiated, so the PGW-C+SMF may determine which MBS service is being left. If the terminal requests a PDN disconnection, the terminal may be treated as having left all MBS services provided through that PDN.

10. the PGW-C+SMF may recognize that the terminal is no longer receiving multicast services and perform N4 Modification (e.g., if the terminal requests dedicated bearer deactivation) or N4 Release (e.g., if the terminal requests PDN disconnection) to the UPF to stop MBS data transmission to the terminal.

11. the UPF may stop transmitting MBS traffic.

12. The PGW-C+SMF may perform a Dedicated Bearer Activation Procedure or a Bearer Modification Procedure or a PDN GW Initiated Bearer Deactivation Procedure or a PDN disconnection Procedure according to conventional procedures. This allows to deactivate a bearer used for MBS services or release a PDN connection.

The PGW-C+SMF may decide which procedure to use based on the following considerations
- If the terminal used the PDN Disconnection Request in step 8, the PGW-C+SMF may perform the PDN disconnection procedure.
- If the terminal used the Bearer Resource Modification Request in step 5, the PGW-C+SMF may perform the PDN GW Initiated Bearer Deactivation procedure if the PGW-C+SMF decides to apply it to the dedicated bearer where the MBS service was used (e.g., if the dedicated bearer is being used exclusively for the MBS service).
- If the terminal used the Bearer Resource Modification Request in step 5, the PGW-C+SMF may perform the Bearer Modification procedure to update the packet filter information if the terminal decides to keep the dedicated bearer used for MBS services (for example, if the dedicated bearer is being used for other services in addition to MBS services).
- If the terminal has used the Bearer Resource Modification Request in step 5, and if the PGW-C+SMF may need to create a new dedicated bearer (e.g., if the dedicated bearer that was used for MBS services is being used for other services, PGW-C+SMF decides to create a new bearer for the other service, or the terminal runs a new app and requests to create a dedicated bearer and leave the MBS service at the same time), the Dedicated Bearer Activation Procedure may be performed.

13. the PGW-C+SMF may remove the terminal from the MBS session context.

### 2. The second disclosure

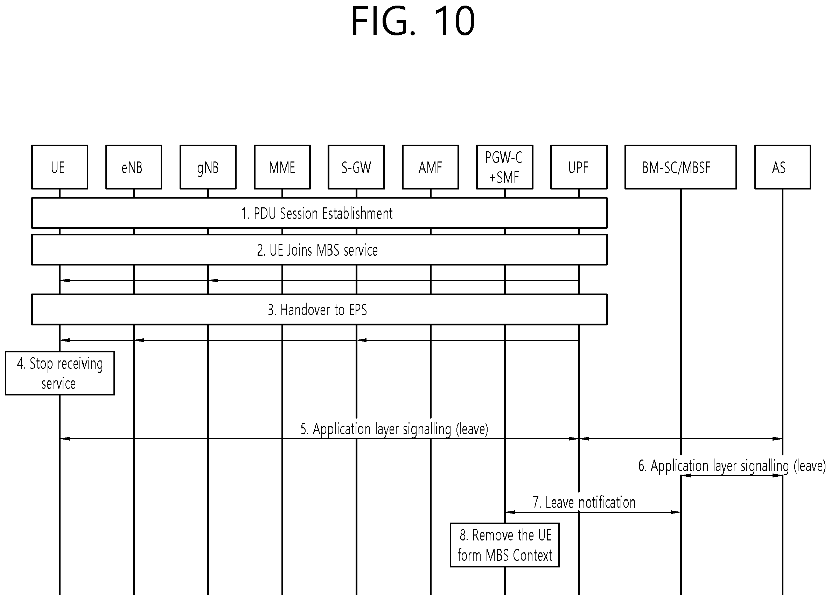

**FIG. 10** **illustrates a second disclosure of the present specification.**

FIG. 10 illustrates a method for a terminal to notify an application server to leave.

When a terminal wishes to stop receiving MBS services from the EPS (or to leave a multicast service), the terminal may notify an application server (e.g., GCS AS, MC Service Server, etc.) via application layer signaling that it wishes to leave. This may be accompanied by relevant Temporary Mobile Group Identity (TMGI) information to indicate which MBS service the leave request is for.

The application layer signaling may be sent using SIP messages. When SIP messages are used, the information indicating the leave can be included by defining a new header in the SIP message, by defining a new tag in an existing header, or by including it in the SDP part. If SIP messages are used, the information indicating a leave may be expressed in a variety of other forms.

An application server that receives a leave message from a terminal may inform the network that the terminal has stopped receiving MBS services. Based on this, the network may stop sending MBS traffic to the terminal.
1. After the terminal registers in the 5GS, it may establish a PDU session. During this process, the terminal may send a PDU Session Request to indicate that it can receive multicast services. Therefore, the terminal may make AMF create a session through PGW-C+SMF supporting multicast.
2. In order to receive MBS services, especially multicast services, the terminal may send a NAS message to indicate that it wants to join the service. The terminal may indicate which MBS service the terminal wants to join by providing TMGI information (which can be interpreted as an MBS Session ID) that maps to the MBS service which the terminal wants to join. Then, the terminal may receive the service via the 5GC Individual MBS traffic delivery method or the 5GC Shared MBS traffic delivery method.
3. Handover to the EPS may occur due to the mobility of the terminal. At this time, multicast is not supported in EPS, so the terminal may receive data via 5GC Individual MBS traffic delivery method.
4. The terminal may decide to stop receiving the MBS service. Alternatively, the terminal may decide to leave the multicast service.
5. The application layer of the terminal may notify the application server that the terminal stops receiving MBS services. This may be accompanied by information about which MBS services (e.g., TMGI, MBS Session ID). Since the AS has never sent MBS traffic in unicast format directly to the terminal, the AS may indirectly know that the terminal has been receiving data from the network in an individual delivery method. Based on this, the AS may perform step 6 to notify the network that the terminal has discontinued the MBS service in order to request that traffic to the terminal be discontinued. Alternatively, without this process, if the application server receives a message from the terminal indicating that the terminal has discontinued the MBS service, it may automatically notify the network that the terminal has discontinued the MBS service.
6. The application server may notify the network that the terminal has stopped receiving multicast services based on the IP information of the terminal. This may be forwarded to BM-SC+MBSF nodes, NEFs, PCFs, etc. Information such as TMGI and MBS Session ID may be transmitted altogether to indicate which MBS service has been stopped.
7. The network may notify to PGW-C+SMF that the terminal has stopped a specific MBS service. This may be communicated directly with PGW-C+SMF or via MB-SMF. For example, if the BM-SC+MBSF informs service interruption, the BM-SC+MBSF may first inform to MB-SMF, and then the MB-SMF may inform PGW-C+SMF. At this time, the MB-SMF may determine whether PGW-C+SMF is the serving node of the terminal based on the terminal's IP address information. In another example, if the application server informs the PCF that the terminal has stopped the specific MBS service, the PCF may inform the PGW-C+SMF.
8. The PGW-C+SMF may treat the terminal as having left the MBS service for which the terminal has stopped receiving and no longer transmit MBS traffic. If necessary, it may perform deactivation for the associated bearer or PDN connection release.

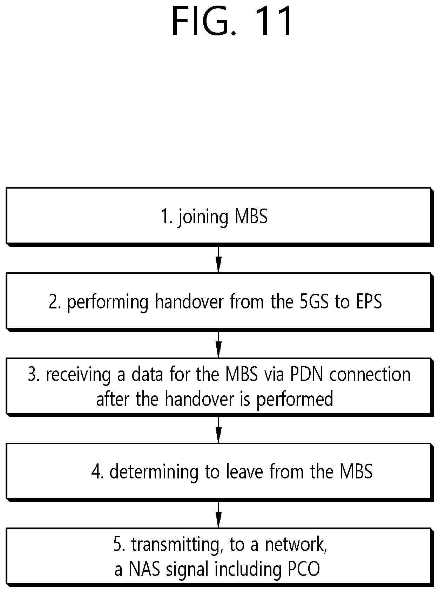

**FIG. 11** **shows a procedure of a terminal according to the first disclosure of this specification.**
1. The terminal may join Multicast and Broadcast Services, MBS.
   A data for the MBS may be served by 5th Generation System, 5GS.
2. The terminal may perform handover from the 5GS to Evolved Packet System, EPS.
3. The terminal may receive a data for the MBS via Packet Data Network, PDN, connection after the handover is performed.
4. The terminal may determine to leave from the MBS.
5. The terminal may transmit, to a network, a NAS signal including Protocol Configuration Options, PCO.

The PCO may include leaving information that the UE wants to leave from the MBS.

The NAS signal may include Temporary Mobile Group Identity, TMGI, related to the MBS.

The step of joining the MBS may comprise: transmitting, to the network, information about whether the UE can includes the leaving information in the PCO.

The network may be a node combining Gateway-Control, PGW-C, and Session Management Function, SMF.

Hereinafter, an apparatus for performing communication according to some embodiments of the present specification will be described.

For example, a terminal may include a processor, a transceiver, and a memory.

For example, a processor may be configured to be operably coupled with a memory and a processor.

The processor may perform: joining Multicast and Broadcast Services, MBS, wherein a data for the MBS is served by 5th Generation System, 5GS; performing handover from the 5GS to Evolved Packet System, EPS; receiving a data for the MBS via Packet Data Network, PDN, connection after the handover is performed; determining to leave from the MBS; transmitting, to a network, a NAS signal including Protocol Configuration Options, PCO, wherein the PCO includes leaving information that the UE wants to leave from the MBS.

Hereinafter, a processor for providing multicast service in wireless communication according to some embodiments of the present specification will be described.

The processor is configured to: joining Multicast and Broadcast Services, MBS, wherein a data for the MBS is served by 5th Generation System, 5GS; performing handover from the 5GS to Evolved Packet System, EPS; receiving a data for the MBS via Packet Data Network, PDN, connection after the handover is performed; determining to leave from the MBS; transmitting, to a network, a NAS signal including Protocol Configuration Options, PCO, wherein the PCO includes leaving information that the UE wants to leave from the MBS.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause the processors to: joining Multicast and Broadcast Services, MBS, wherein a data for the MBS is served by 5th Generation System, 5GS; performing handover from the 5GS to Evolved Packet System, EPS; receiving a data for the MBS via Packet Data Network, PDN, connection after the handover is performed; determining to leave from the MBS; transmitting, to a network, a NAS signal including Protocol Configuration Options, PCO, wherein the PCO includes leaving information that the UE wants to leave from the MBS.

The present specification may have various effects.

For example, with the procedures disclosed in the present specification, for traffic transmitted in a multicast manner in the 5GS, if the UE moves to the EPS and then switches a PDN connection to transmit the traffic, it is possible to prevent unnecessary wasted resources by requesting to discontinue transmission of MBS traffic when the terminal no longer wants to receive MBS services.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method for performing communication, performed by a User Equipment, UE, comprising:
joining Multicast and Broadcast Services, MBS,
wherein a data for the MBS is served by 5th Generation System, 5GS;
performing handover from the 5GS to Evolved Packet System, EPS;
receiving a data for the MBS via Packet Data Network, PDN, connection after the handover is performed;
determining to leave from the MBS;
transmitting, to a network, a NAS signal including Protocol Configuration Options, PCO,
wherein the PCO includes leaving information that the UE wants to leave from the MBS.

2. The method of claim 1,
wherein the NAS signal includes Temporary Mobile Group Identity, TMGI, related to the MBS.

3. The method of claim 1,
wherein the step of joining the MBS comprising:
transmitting, to the network, information about whether the UE can includes the leaving information in the PCO.

4. The method of claim 1,
wherein the network is a node combining Gateway-Control, PGW-C, and Session Management Function, SMF.

5. A User Equipment, UE, to perform communication, comprising:
a transceiver; and
a processor,
wherein the processor performs operation comprising:
joining Multicast and Broadcast Services, MBS,
wherein a data for the MBS is served by 5th Generation System, 5GS;
performing handover from the 5GS to Evolved Packet System, EPS;
receiving a data for the MBS via Packet Data Network, PDN, connection after the handover is performed;
determining to leave from the MBS;
transmitting, to a network, a NAS signal including Protocol Configuration Options, PCO,
wherein the PCO includes leaving information that the UE wants to leave from the MBS.

6. The LTE of claim 5,
Wherein the NAS signal includes Temporary Mobile Group Identity, TMGI, related to the MBS.

7. The LTE of claim 5,
wherein the step of joining the MBS comprising:
transmitting, to the network, information about whether the UE can includes the leaving information in the PCO.

8. The LTE of claim 5,
wherein the network is a node combining Gateway-Control, PGW-C, and Session Management Function, SMF.

9. An apparatus in mobile communication, comprising:
at least one processor; and
at least one memory storing instructions and operably electrically connectable with the at least one processor, based on the instructions being operated by the at least one processor, performed operation comprising:
joining Multicast and Broadcast Services, MBS,
wherein a data for the MBS is served by 5th Generation System, 5GS;
performing handover from the 5GS to Evolved Packet System, EPS;
receiving a data for the MBS via Packet Data Network, PDN, connection after the handover is performed;
determining to leave from the MBS;
transmitting, to a network, a NAS signal including Protocol Configuration Options, PCO,
wherein the PCO includes leaving information that the UE wants to leave from the MBS.

10. A non-volatile computer readable storage medium having recorded instructions, wherein the instructions, based on being executed by one or more processors, cause the one or more processors to:
joining Multicast and Broadcast Services, MBS,
wherein a data for the MBS is served by 5th Generation System, 5GS;
performing handover from the 5GS to Evolved Packet System, EPS;
receiving a data for the MBS via Packet Data Network, PDN, connection after the handover is performed;
determining to leave from the MBS;
transmitting, to a network, a NAS signal including Protocol Configuration Options, PCO,
wherein the PCO includes leaving information that the UE wants to leave from the MBS.
